# FASCICULE DE BREVET EUROPEEN

(11) **EP 0 833 102 B1**
(45) Date de publication et mention de la délivrance du brevet: **19.04.2006**
(21) Numéro de dépôt: 97202887.2
(22) Date de dépôt: 19.09.1997
(51) Int. Cl.: G02B 6/00, G02B 6/42

(54) **Générateur de lumière pour un conduit optique**
Lichterzeuger für einen optischen Leiter
Light generator for an optical conductor

(30) Priorité: 26.09.1996 FR 9611713
(43) Date de publication de la demande: 01.04.1998
(73) Titulaire: Koninklijke Philips Electronics N.V., 5621 BA Eindhoven (NL)
(72) Inventeur: Bernadeu, Eusebio, 75008 Paris (FR); Guerrero, Hector, 75008 Paris (FR); Hernandez, Antonio, 75008 Paris (FR); Vasquez, Daniel, 75008 Paris (FR)
(74) Mandataire: Charpail, François

(56) Documents cités:
- GB-A- 1 151 829
- GB-A- 2 273 976
- US-A- 3 564 231
- US-A- 5 416 669

## Description

La présente invention concerne un générateur de lumière pour introduire de la lumière dans un conducteur optique, comportant une lampe et son réflecteur, un premier support destiné à maintenir en position la lampe et son réflecteur, un second support destiné à maintenir l'extrémité d'un conducteur optique en position en face de la lampe et du réflecteur, et une pièce intermédiaire entre la position de la lampe et le second support, qui a une forme se rétrécissant du côté du second support, et qui possède une paroi dont la surface intérieure est réfléchissante, qui enferme l'espace compris entre d'une part la lampe et son réflecteur et d'autre part le second support

L'invention s'applique dans le domaine de l'éclairage décoratif.

Un générateur de lumière pour introduire de la lumière dans un conducteur optique, correspondant au préambule ci-dessus, est connu du document US 5416669 et du document US 3,564,231. Le générateur de ces documents présente une pièce intermédiaire entre le réflecteur de la lampe et l'extrémité du conducteur optique, qui a une forme se rétrécissant du côté de l'extrémité du conducteur optique, pièce qui sert à assembler ces éléments de façon à obtenir un ensemble monobloc, qui puisse être tenu à la main. Il n'est pas mentionné que la pièce intermédiaire ait un rôle optique.

Un objet de l'invention est d'augmenter l'efficacité lumineuse par des moyens simples.

A cet effet, la pièce intermédiaire comporte un ensemble d'orifices pour laisser passer de l'air, comprenant au moins un orifice de refroidissement, ledit ensemble d'orifices occupant une fraction inférieure au tiers de la surface de la paroi.

L'efficacité lumineuse est améliorée grâce à la surface intérieure réfléchissante placée autour de l'espace compris entre la lampe et le conduit optique. De préférence, l'orifice de refroidissement occupe une fraction inférieure au tiers de la surface de la paroi.

Ceci permet de conserver un maximum de surface réfléchissante pour une bonne efficacité lumineuse.

De préférence, l'orifice est disposé dans la partie la plus large de la paroi, du côté de la lampe.

Ainsi il est situé dans une position où un minimum de lumière est perdu au travers de l'orifice.

Dans un mode de réalisation particulier, la pièce intermédiaire a la forme d'un tronc de cône.

Cette forme est plus facile à réaliser qu'un paraboloïde, qui en théorie serait plus efficace, et procure néanmoins un rendement lumineux tout aussi bon.

Dans une forme de réalisation particulière, la pièce intermédiaire est faite d'aluminium anodisé à haute réflectance.

Ces aspects de l'invention ainsi que d'autres aspects plus détaillés apparaîtront plus clairement grâce à la description suivante d'un mode de réalisation constituant un exemple non limitatif.

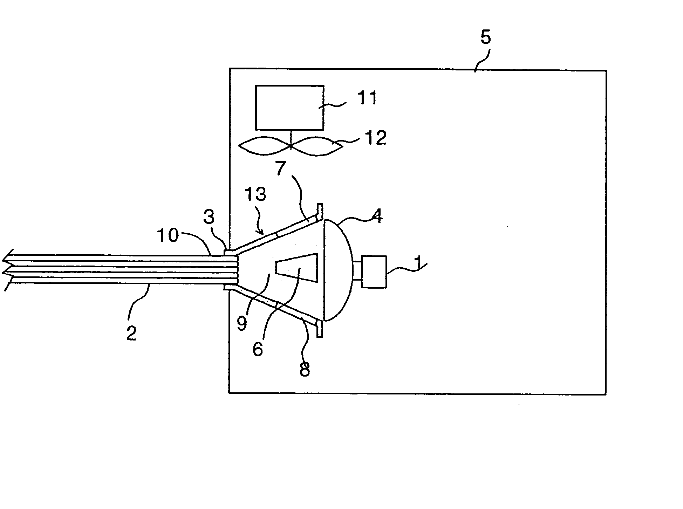

La figure unique représente schématiquement un générateur de lumière.

Le générateur de lumière 5 de la figure unique sert à introduire de la lumière dans un conducteur optique 2, par exemple un faisceau de fibres optiques dont le diamètre est de l'ordre de deux centimètres. Il comporte un premier support 1 destiné à maintenir en position une lampe 4 et un réflecteur, par exemple une lampe du type halogène à réflecteur dichroïque incorporé.

Il comporte en outre une pièce intermédiaire 13, qui constitue un concentrateur de lumière, positionnée entre la lampe et le réflecteur et l'extrémité 10 du conducteur optique 2. Cette pièce intermédiaire 13 possède une paroi qui enferme un espace 9, indiqué en grisé, compris entre le réflecteur de la lampe 4 et l'extrémité 10 du conducteur optique 2.

La paroi comporte des orifices 6, 7, 8 pour laisser passer de l'air qui est soufflé par une hélice 12 entraînée par un moteur 11. Ces orifices occupent une fraction réduite de la surface de la paroi, par exemple inférieure au tiers de cette surface, et sont répartis sur la surface selon une symétrie de révolution. On pourrait aussi imaginer qu'ils ne soient présents que dans la direction de soufflage de l'air (trous 7 et 8). L'hélice n'est pas obligatoirement située juste à côté de la pièce, pourvu qu'un courant d'air y parvienne.

Afin que la surface intérieure de la paroi soit réfléchissante sur toute sa surface (sauf à l'emplacement des orifices), la pièce intermédiaire est faite par exemple d'aluminium anodisé à haute réflectance.

La paroi a une forme de tronc de cône, qui se rétrécit du côté du conducteur optique. Elle pourrait aussi avoir une forme de paraboloide, ou une section elliptique, mais un tel concentrateur serait plus coûteux. Les orifices sont situés du côté de la lampe, c'est-à-dire du côté le plus large.

Le support destiné à maintenir l'extrémité du conducteur optique 2 en position en face de la lampe 4, est constitué ici par l'extrémité 3, à gauche sur la figure, de la pièce intermédiaire 13 elle même.

Un filtre absorbant les lumières ultra-violette et infrarouge peut être placé dans l'espace 9, par exemple entre la lampe et l'entrée du concentrateur 13.

## Revendications

1. Générateur de lumière (5) pour introduire de la lumière dans un conducteur optique (2), comportant une lampe (4) et son réflecteur, un premier support (1) destiné à maintenir en position la lampe et son réflecteur, un second support (3) destiné à maintenir l'extrémité (10) d'un conducteur optique en position en face de la lampe et du réflecteur, et une pièce intermédiaire (13) entre la position de la lampe et le second support, qui a une forme se rétrécissant du côté du second support, et qui possède une paroi dont la surface intérieure est réfléchissante, qui enferme l'espace (9) compris entre d'une part la lampe et son réflecteur et d'autre part le second support, **caractérisé en ce que** la pièce intermédiaire comporte un ensemble d'orifices (6, 7, 8) pour laisser passer de l'air, comprenant au moins un orifice de refroidissement, ledit ensemble d'orifices occupant une fraction inférieure au tiers de la surface de la paroi.

2. Générateur de lumière selon la revendication 1, **caractérisé en ce que** l'orifice est disposé dans la partie la plus large de la paroi, du côté de la lampe.

3. Générateur de lumière selon l'une des revendications 1 ou 2, **caractérisé en ce que** la pièce intermédiaire a la forme d'un tronc de cône.

4. Générateur de lumière selon l'une quelconque des revendications 1 à 3, **caractérisé en ce que** la pièce intermédiaire est faite d'aluminium anodisé à haute réflectance

## Patentansprüche

1. Lichterzeuger (5) zur Einführung von Licht in einen optischen Leiter (2), mit einer Lampe (4) und ihrem Reflektor, einem ersten Träger (1), um die Lampe und ihren Reflektor in Position zu halten, einem zweiten Träger (3), um das Ende (10) eines optischen Leiters gegenüber der Lampe und des Reflektors in Position zu halten, und einem Teil (13) in Position zwischen der Position der Lampe und des zweiten Trägers, der eine Form hat, die sich an der Seite des zweites Trägers verengt, die eine Wand hat, deren Innenfläche reflektiert und den zwischen einerseits der Lampe und ihrem Reflektor und andererseits dem zweiten Träger enthaltenen Raum (9) einschließt, **dadurch gekennzeichnet, dass** das Zwischenteil eine Einheit mit Öffnungen (6, 7, 8) enthält, um Luft durchzulassen, mit mindestens einer Kühlöffnung, wobei die besagte Einheit mit Öffnungen einen Teil einnimmt, der kleiner als ein Drittel der Wandfläche ist.

2. Lichterzeuger nach Anspruch 1, **dadurch gekennzeichnet, dass** die Öffnung im breitesten Teil der Wand an der Seite der Lampe angeordnet ist.

3. Lichterzeuger nach einem der Ansprüche 1 oder 2, **dadurch gekennzeichnet, dass** das Zwischenteil die Form eines Kegelstumpfs hat.

4. Lichterzeuger nach einem beliebigen der Ansprüche 1 bis 3, **dadurch gekennzeichnet, dass** das Zwischenteil aus hochglanzeloxiertem Aluminium gefertigt ist.

## Claims

1. A light generator (5) for introducing light into an optical conductor or waveguide (2), said light generator comprising a lamp (4) and an associated reflector, a first support (1) designed to keep the lamp and its reflector in position, a second support (3) designed to keep the end (10) of an optical waveguide in position opposite the lamp and the reflector, and an intermediate piece (13) between the position of the lamp and the second support, which intermediate piece has a shape that narrows towards the side of the second support and which intermediate piece has a wall whose inner surface is reflecting, enclosing the space (9) existing between the lamp and the reflector at one side and the second support at the other side, **characterized in that** the intermediate piece comprises a set of orifices (6, 7, 8) allowing air to pass through them, among them at least one cooling vent, which set of orifices accounts for less than one third of the surface area of the wall.

2. A light generator as claimed in claim 1, **characterized in that** the orifice is disposed in the widest portion of the wall, at the side of the lamp.

3. A light generator as claimed in one of the claims 1 and 2, **characterized in that** the intermediate piece has the shape of a truncated cone.

4. A light generator as claimed in any one of the claims 1 to 3, **characterized in that** the intermediate piece is made from highly reflecting anodized aluminum.
